(19) Europäisches Patentamt / European Patent Office / Office européen des brevets

(11) **EP 4 618 205 A1**

(12) **EUROPEAN PATENT APPLICATION**
published in accordance with Art. 153(4) EPC

(43) Date of publication:
**17.09.2025 Bulletin 2025/38**

(21) Application number: **23888371.4**

(22) Date of filing: **26.09.2023**

(51) International Patent Classification (IPC):
*H01M 8/18* (2006.01)   *H01M 8/0438* (2016.01)
*H01M 8/0444* (2016.01)   *H01M 8/04537* (2016.01)
*H01M 8/04746* (2016.01)   *H01M 8/04858* (2016.01)
*H01M 8/04955* (2016.01)

(52) Cooperative Patent Classification (CPC):
**H01M 8/0438; H01M 8/0444; H01M 8/04537;
H01M 8/04746; H01M 8/04858; H01M 8/04955;
H01M 8/18; Y02E 60/10; Y02E 60/50**

(86) International application number:
**PCT/JP2023/034911**

(87) International publication number:
**WO 2024/101018 (16.05.2024 Gazette 2024/20)**

(84) Designated Contracting States:
**AL AT BE BG CH CY CZ DE DK EE ES FI FR GB
GR HR HU IE IS IT LI LT LU MC ME MK MT NL
NO PL PT RO RS SE SI SK SM TR**
Designated Extension States:
**BA**
Designated Validation States:
**KH MA MD TN**

(30) Priority: **07.11.2022 JP 2022178361**

(71) Applicant: **SUMITOMO ELECTRIC INDUSTRIES,
LTD.
Osaka-shi, Osaka 541-0041 (JP)**

(72) Inventors:
• **IKEGAMI, Takahiro
Osaka-shi, Osaka 541-0041 (JP)**

• **ZHOU, Xiaoyu
Osaka-shi, Osaka 541-0041 (JP)**
• **TAGUCHI, Daisaku
Osaka-shi, Osaka 541-0041 (JP)**
• **NAITO, Yasuhiro
Osaka-shi, Osaka 541-0041 (JP)**
• **TATSUMI, Ryouta
Osaka-shi, Osaka 541-0041 (JP)**
• **HAYASHI, Kiyoaki
Osaka-shi, Osaka 541-0041 (JP)**

(74) Representative: **Müller-Boré & Partner
Patentanwälte PartG mbB
Friedenheimer Brücke 21
80639 München (DE)**

(54) **REDOX FLOW BATTERY SYSTEM AND REDOX FLOW BATTERY SYSTEM OPERATING
METHOD**

(57) The present invention provides a redox flow battery system including: a main cell that performs charge and discharge through supply of a positive electrolyte and a negative electrolyte; a plurality of monitor cells selected from the group consisting of a bipolar monitor cell, a positive monitor cell, and a negative monitor cell; and a controller that controls charge and discharge of the main cell. The controller issues an operation command to an alarm device when a specific condition is satisfied.

EP 4 618 205 A1

**FIG. 1**

## Description

TECHNICAL FIELD

The present disclosure relates to a redox flow battery system and a method of operating a redox flow battery system. This application claims priority based on Japanese Patent Application No. 2022-178361 filed on November 7, 2022, the entire contents of which are incorporated herein by reference.

BACKGROUND ART

A redox flow battery system of Patent Literature 1 includes a main cell and a monitor cell. The main cell is supplied with a positive electrolyte and a negative electrolyte to perform charging and discharging. The monitor cell includes a first monitor cell to which a positive electrolyte common to the main cell is supplied and a second monitor cell to which a negative electrolyte common to the main cell is supplied. The first monitor cell and the second monitor cell do not perform charging and discharging unlike the main cell. The open circuit voltage of the first monitor cell is measured, and the ionic valence of the positive electrolyte corresponding to the measured open circuit voltage is obtained. A charging state of the positive electrolyte corresponding to the obtained ionic valence of the positive electrolyte is obtained. The open circuit voltage of the second monitor cell is measured, and the ionic valence of the negative electrolyte corresponding to the measured open circuit voltage is obtained. A charging state of the negative electrolyte corresponding to the obtained ionic valence of the negative electrolyte is obtained. The redox flow battery system of Patent Literature 1 stops operation at the time when the obtained charging state reaches a predetermined value that predicts overcharging.

CITATION LIST

PATENT LITERATURE

Patent literature 1: Japanese Unexamined Patent Application Publication No. 2009-16217
Patent literature 2: Japanese Unexamined Patent Application Publication No. 2020-187939

SUMMARY OF INVENTION

A redox flow battery system of the present disclosure includes a main cell configured to be charged and discharged by supply of a positive electrolyte and a negative electrolyte, a plurality of monitor cells selected from the group consisting of a bipolar monitor cell, a positive monitor cell, and a negative monitor cell, and a controller configured to control charging and discharging of the main cell. The bipolar monitor cell is supplied with the positive electrolyte and the negative electrolyte, the positive electrolyte and the negative electrolyte being common to the main cell, the positive monitor cell is supplied with the positive electrolyte common to the main cell without being supplied with the negative electrolyte common to the main cell, the negative monitor cell is supplied with the negative electrolyte common to the main cell without being supplied with the positive electrolyte common to the main cell, the controller is configured to issue an operation command to an alarm device when a calculated value of an amount of change in a charging molar concentration of an active material of the positive electrolyte deviates from a measured value of the amount of change in the charged molar concentration of the active material of the positive electrolyte by a predetermined value or more or when a calculated value of an amount of change in a charging molar concentration of an active material of the negative electrolyte deviates from a measured value of the amount of change in the charging molar concentration of the active material of the negative electrolyte by a predetermined value or more, the measured value of the amount of change in the charging molar concentration of the active material of the positive electrolyte is obtained by the positive monitor cell or by the bipolar monitor cell and the negative monitor cell, the calculated value of the amount of change in the charging molar concentration of the active material of the positive electrolyte is obtained by using the measured value of the amount of change in the charging molar concentration of the active material of the negative electrolyte and a set value of a liquid amount ratio of the positive electrolyte to the negative electrolyte, the measured value of the amount of change in the charging molar concentration of the active material of the negative electrolyte is obtained by the negative monitor cell or by the bipolar monitor cell and the positive monitor cell, and the calculated value of the amount of change in the charging molar concentration of the active material of the negative electrolyte is obtained by using the measured value of the amount of change in the charging molar concentration of the active material of the positive electrolyte and a set value of a liquid amount ratio of the negative electrolyte to the positive electrolyte.

BRIEF DESCRIPTION OF THE DRAWINGS

FIG. 1 is a schematic diagram showing the configuration of a redox flow battery system of first embodiment.
FIG. 2 is a flowchart for explaining a control procedure by a controller provided in the redox flow battery system of the first embodiment.
FIG. 3 is a schematic diagram showing the configuration of a redox flow battery system of second embodiment.

FIG. 4 is a schematic diagram showing the configuration of a redox flow battery system of third embodiment.

FIG. 5 is a schematic diagram showing a configuration of another example of a redox flow battery system of third embodiment.

FIG. 6 is a flowchart for explaining a control procedure by a controller provided in the redox flow battery system of third embodiment.

DETAILED DESCRIPTION

[Problems to be Solved by Present Disclosure]

The redox flow battery system of Patent Literature 1 cannot predict that overcharging will occur when the system continues to operate before the predetermined value is reached.

An object of the present disclosure is to provide a redox flow battery system capable of predicting that overcharging will occur regardless of the charging state.

[Advantageous Effects of Present Disclosure]

The redox flow battery system of the present disclosure can predict that overcharging will occur regardless of the charging state.

<<Description of Embodiments of Present Disclosure>>

The inventors of the present invention have examined the history of the charging state when overcharging occurs during operation of the redox flow battery system. As a result, the inventors have obtained the following knowledge about the following specific parameters having a correlation with the charging state. The occurrence of a deviation of a predetermined value or more between the measured value or set value and the calculated value of the following specific parameter regardless of the charging state indicates a sign that there is a high possibility that overcharging will occur in the future. The specific parameter is a charging molar concentration of an active material of the electrolyte, a liquid amount ratio of the electrolyte, or an active material concentration ratio of the electrolyte. The present invention has been made based on these findings. First, embodiments of the present disclosure will be listed and described.

(1) A redox flow battery system of one embodiment of the present disclosure includes a main cell configured to be charged and discharged by supply of a positive electrolyte and a negative electrolyte, a plurality of monitor cells selected from the group consisting of a bipolar monitor cell, a positive monitor cell, and a negative monitor cell, and a controller configured to control charging and discharging of the main cell. The bipolar monitor cell is supplied with the positive electrolyte and the negative electrolyte, the positive electrolyte and the negative electrolyte being common to the main cell, the positive monitor cell is supplied with the positive electrolyte common to the main cell without being supplied with the negative electrolyte common to the main cell, the negative monitor cell is supplied with the negative electrolyte common to the main cell without being supplied with the positive electrolyte common to the main cell, the controller is configured to issue an operation command to an alarm device when a calculated value of an amount of change in a charging molar concentration of an active material of the positive electrolyte deviates from a measured value of the amount of change in the charging molar concentration of the active material of the positive electrolyte by a predetermined value or more or when a calculated value of an amount of change in a charging molar concentration of an active material of the negative electrolyte deviates from a measured value of the amount of change in the charging molar concentration of the active material of the negative electrolyte by a predetermined value or more, the measured value of the amount of change in the charging molar concentration of the active material of the positive electrolyte is obtained by the positive monitor cell or by the bipolar monitor cell and the negative monitor cell, the calculated value of the amount of change in the charging molar concentration of the active material of the positive electrolyte is obtained by using the measured value of the amount of change in the charging molar concentration of the active material of the negative electrolyte and a set value of a liquid amount ratio of the positive electrolyte to the negative electrolyte, the measured value of the amount of change in the charging molar concentration of the active material of the negative electrolyte is obtained by the negative monitor cell or by the bipolar monitor cell and the positive monitor cell, and the calculated value of the amount of change in the charging molar concentration of the active material of the negative electrolyte is obtained by using the measured value of the amount of change in the charging molar concentration of the active material of the positive electrolyte and a set value of a liquid amount ratio of the negative electrolyte to the positive electrolyte.

(2) A redox flow battery system of one embodiment of the present disclosure includes a main cell configured to be charged and discharged by supply of a positive electrolyte and a negative electrolyte, a plurality of monitor cells selected from the group consisting of a bipolar monitor cell, a positive monitor cell, and a negative monitor cell, and a controller configured to control charging and discharging of the main cell. The bipolar monitor cell is supplied with the positive electrolyte and the negative electrolyte, the positive electrolyte and the negative electrolyte being common to the main cell, the positive monitor cell is supplied with the positive electrolyte common to the main cell without being supplied with the negative electrolyte common to the main cell, the negative monitor cell is supplied with the negative electrolyte common to the main cell without being supplied with the positive electrolyte common to the main cell, the controller is configured to issue an operation command to an alarm device when a calculated value of a liquid amount ratio of the positive electrolyte to the negative electrolyte deviates from a set value of the liquid amount ratio of the positive electrolyte to the negative electrolyte by a predetermined value or more or when a calculated value of a liquid amount ratio of the negative electrolyte to the positive electrolyte deviates from a set value of the liquid amount ratio of the negative electrolyte to the positive electrolyte by a predetermined value or more, the calculated value of the liquid amount ratio of the positive electrolyte to the negative electrolyte and the calculated value of the liquid amount ratio of the negative electrolyte to the positive electrolyte are obtained by using a measured value of an amount of change in a charging molar concentration of an active material of the positive electrolyte and a measured value of an amount of change in a charging molar concentration of an active material of the negative electrolyte, the measured value of the amount of change in the charging molar concentration of the active material of the positive electrolyte is obtained by the positive monitor cell or by the bipolar monitor cell and the negative monitor cell, and the measured value of the amount of change in the charging molar concentration of the active material of the negative electrolyte is obtained by the negative monitor cell or by the bipolar monitor cell and the positive monitor cell.

(3) A redox flow battery system of one embodiment of the present disclosure includes a main cell configured to be charged and discharged by supply of a positive electrolyte and a negative electrolyte, a plurality of monitor cells selected from the group consisting of a bipolar monitor cell, a positive monitor cell, and a negative monitor cell, and a controller configured to control charging and discharging of the main cell. The bipolar monitor cell is supplied with the positive electrolyte and the negative electrolyte, the positive electrolyte and the negative electrolyte being common to the main cell, the positive monitor cell is supplied with the positive electrolyte common to the main cell without being supplied with the negative electrolyte common to the main cell, the negative monitor cell is supplied with the negative electrolyte common to the main cell without being supplied with the positive electrolyte common to the main cell, the controller is configured to issue an operation command to an alarm device when a calculated value of an active material concentration ratio of the positive electrolyte to the negative electrolyte deviates from a set value of the active material concentration ratio of the positive electrolyte to the negative electrolyte by a predetermined value or more or when a calculated value of an active material concentration ratio of the negative electrolyte to the positive electrolyte deviates from a set value of the active material concentration ratio of the negative electrolyte to the positive electrolyte by a predetermined value or more, the calculated value of the active material concentration ratio of the positive electrolyte to the negative electrolyte is obtained by using a potential of the positive electrolyte, a potential of the negative electrolyte, and a set value of a liquid amount ratio of the positive electrolyte to the negative electrolyte, the calculated value of the active material concentration ratio of the negative electrolyte to the positive electrolyte is obtained by using the potential of the positive electrolyte, the potential of the negative electrolyte, and a set value of a liquid amount ratio of the negative electrolyte to the positive electrolyte, the potential of the positive electrolyte is obtained by the positive monitor cell or by the bipolar monitor cell and the negative monitor cell, and the potential of the negative electrolyte is obtained by the negative monitor cell or by the bipolar monitor cell and the positive monitor cell.

The redox flow battery system of the above (1), (2), and (3) can detect the sign by the determination of the controller. Thus, the redox flow battery system of the above (1), (2), and (3) can predict that overcharging will occur regardless of the charging state. In the redox flow battery system of the above (1), (2), and (3), the alarm device issues an alarm by issuing the operation command to the alarm device, and thus it is possible to notify the worker who operates the redox flow battery system that the sign is observed. The worker can prepare for measures to prevent a failure due to overcharging before the overcharging occurs. In addition, the worker can maximize the charging time or discharging time of the redox flow battery system. The worker can perform a stop operation of charging or discharging. When the charging or discharging is stopped, the occurrence of the overcharging is prevented more reliably.

(4) In the redox flow battery system according to the above (1) or (2), the positive monitor cell may obtain the measured value of the amount of change in the charging molar concentration of the active material of the positive electrolyte, based on an absolute potential of the positive electrolyte, and the negative monitor cell may obtain the measured value of the amount of change in the charging molar concentration of the active material of the negative electrolyte, based on an absolute potential of the negative electrolyte.

In the configuration of the above (4), it is easy to obtain each measured value described above.

(5) In the redox flow battery system according to the above (3) or (4), the positive monitor cell may measure a potential difference of the positive electrolyte with respect to a reference positive electrode having a known potential, and the negative monitor cell may measure a potential difference of the negative electrolyte with respect to a reference negative electrode having a known potential.

In the configuration of the above (5), it is easy to obtain each calculated value described above. In the configurations of the above (4) and (5), each measured value described above is also easily obtained. This is because each measured value corresponds to each potential difference, and each calculated values is obtained using each measured value.

(6) In the redox flow battery system according to the above (3) or (4), the positive monitor cell may measure a potential difference of the positive electrolyte with respect to a reference positive electrolyte having a known amount of change in a charging molar concentration of an active material, and the negative monitor cell may measure a potential difference of the negative electrolyte with respect to a reference negative electrolyte having a known amount of change in a charging molar concentration of an active material.

In the configuration of the above (6), it is easy to obtain each calculated value described above. In the configurations of the above (4) and (6), it is easy to obtain each measured value described above.

(7) In the redox flow battery system according to any one of the above (1) to (6), the controller may be configured to stop charging or discharging of the main cell after the controller issues the operation command to the alarm device.

In the configuration of the above (7), after the controller issues the operation command to the alarm device, the worker can automatically stop charging or discharging without performing a stop operation of charging or discharging. Thus, the configuration of the above (7) can automatically prevent the occurrence of overcharging.

(8) In the redox flow battery system according to any one of the above (1) to (7), the bipolar monitor cell may be provided in a circulation path of the positive electrolyte and the negative electrolyte, the positive monitor cell may be provided in a circulation path of the positive electrolyte, and the negative monitor cell may be provided in a circulation path of the negative electrolyte.

In the configuration of the above (8), it is easy to obtain each measured value or each calculated value.

(9) A method of operating a redox flow battery system of one embodiment of the present disclosure is a method of operating a redox flow battery system for supplying a positive electrolyte and a negative electrolyte to a main cell to charge and discharge the main cell, and includes: obtaining, by a positive monitor cell or by a bipolar monitor cell and a negative monitor cell, a measured value of an amount of change in a charging molar concentration of an active material of the positive electrolyte; obtaining, by the negative monitor cell or by the bipolar monitor cell and the positive monitor cell, a measured value of an amount of change in a charging molar concentration of an active material of the negative electrolyte; obtaining a calculated value of the amount of change in the charging molar concentration of the active material of the positive electrolyte from the measured value of the amount of change in the charging molar concentration of the active material of the negative electrolyte and a set value of a liquid amount ratio of the positive electrolyte to the negative electrolyte, or obtaining a calculated value of the amount of change in the charging molar concentration of the active material of the negative electrolyte from the measured value of the amount of change in the charging molar concentration of the active material of the positive electrolyte and a set value of a liquid amount ratio of the negative electrolyte to the positive electrolyte; and issuing an operation command to an alarm device when the calculated value of the amount of change in the charging molar concentration of the active material of the positive electrolyte deviates from the measured value of the amount of change in the charging molar concentration of the active material of the positive electrolyte by a predetermined value or more or when the calculated value of the amount of change in the charging molar concentration of the active material of the negative electrolyte deviates from the measured value of the amount of change in the charging molar concentration of the active material of the negative electrolyte by a predetermined value or more. The bipolar monitor cell is supplied with the positive electrolyte and the negative electrolyte, the positive electrolyte and the negative electrolyte being common to the main cell, the positive monitor cell is supplied with the positive electrolyte common to the main cell without being supplied with the negative electrolyte common to the main cell, and the negative monitor cell is supplied with the negative electrolyte common to the main cell without being supplied with the positive electrolyte common to the main cell.

(10) A method of operating a redox flow battery system of one embodiment of the present disclosure is a method of operating a redox flow battery system for supplying a positive electrolyte and a negative electrolyte to a main cell to charge and discharge the main cell, and includes: obtaining, by a positive monitor cell or by a bipolar monitor cell and a negative monitor cell, a measured value of an amount of change in a charging molar concentration of an active material of the positive electrolyte; obtaining, by the negative monitor cell or by the bipolar monitor cell and the positive monitor cell, a measured value of an amount of change in a charging molar concentration of an active material of the negative electrolyte; obtaining a calculated value of a liquid amount ratio of the positive electrolyte to the negative electrolyte or a calculated value of a liquid amount ratio of the negative electrolyte to the positive electrolyte, by using the measured value of the amount of change in the charging molar concentration of the active material of the positive electrolyte and the measured value of the amount of change in the charging molar concentration of the active material of the negative electrolyte; and issuing an operation command to an alarm device when the calculated value of the liquid amount ratio of the positive electrolyte to the negative electrolyte deviates from a set value of the liquid amount ratio of the positive electrolyte to the negative electrolyte by a predetermined value or more or when the calculated value of the liquid amount ratio of the negative electrolyte to the positive electrolyte deviates from a set value of the liquid amount ratio of the negative electrolyte to the positive electrolyte by a predetermined value or more. The bipolar monitor cell is supplied with the positive electrolyte and the negative electrolyte, the positive electrolyte and the negative electrolyte being common to the main cell, the positive monitor cell is supplied with the positive electrolyte common to the main cell without being supplied with the negative electrolyte common to the main cell, and the negative monitor cell is supplied with the negative electrolyte common to the main cell without being supplied with the positive electrolyte common to the main cell.

(11) A method of operating a redox flow battery system of one embodiment of the present disclosure is a method of operating a redox flow battery system for supplying a positive electrolyte and a negative electrolyte to a main cell to charge and discharge the main cell, and includes: obtaining, by a positive monitor cell or by a bipolar monitor cell and a negative monitor cell, a potential of the positive electrolyte; obtaining, by the negative monitor cell or by the bipolar monitor cell and the positive monitor cell, a potential of the negative electrolyte; obtaining a calculated value of an active material concentration ratio of the positive electrolyte to the negative electrolyte by using the potential of the positive electrolyte, the potential of the negative electrolyte, and a set value of a liquid amount ratio of the positive electrolyte to the negative electrolyte, or obtaining a calculated value of an active material concentration ratio of the negative electrolyte to the positive electrolyte by using the potential of the positive electrolyte, the potential of the negative electrolyte, and a set value of a liquid amount ratio of the negative electrolyte to the positive electrolyte; and issuing an operation command to an alarm device when the calculated value of the active material concentration ratio of the positive electrolyte to the negative electrolyte deviates from a set value of the active material concentration ratio of the positive electrolyte to the negative electrolyte by a predetermined value or more or when the calculated value of the active material concentration ratio of the negative electrolyte to the positive electrolyte deviates from a set value of the active material concentration ratio of the negative electrolyte to the positive electrolyte by a predetermined value or more. The bipolar monitor cell is supplied with the positive electrolyte and the negative electrolyte, the positive electrolyte and the negative electrolyte being common to the main cell, the positive monitor cell is supplied with the positive electrolyte common to the main cell without being supplied with the negative electrolyte common to the main cell, and the negative monitor cell is supplied with the negative electrolyte common to the main cell without being supplied with the positive electrolyte common to the main cell.

The method of operating redox flow battery system of the above (9), (10), and (11) can detect the sign. Thus, the method of operating redox flow battery system of the above (9), (10), and (11) can predict that overcharging will occur regardless of the charging state. In the method of operating redox flow battery system of the above (9), (10), and (11) the alarm device issues an alarm by issuing the operation command to the alarm device, and thus it is possible to notify the worker who operates the redox flow battery system that the sign is observed. The worker can prepare for measures to prevent a trouble due to overcharging before the overcharging occurs. In addition, the worker can maximize the charging time or discharging time of the redox flow battery system. The worker can perform a stop operation of charging or discharging. When the charging or discharging is stopped, the occurrence of the overcharging is prevented more reliably.

(12) The method of operating a redox flow battery system according to any one of the above (9) to (11) may further include, after the issuing of the operation command to the alarm device, stopping charging or discharging of the main cell.

In the configuration of the above (12), after the operation command is issued to the alarm device, the worker can automatically stop charging or discharging without performing a stop operation of charging or discharging. Thus, the configuration of the above (12) can automatically prevent the occurrence of overcharging.

<<Details of Embodiments of Present Disclosure>>

The details of the redox flow battery system and the method of operating the redox flow battery system of the present disclosure are described below. The same reference numerals in the drawings denote the same components.

<<First embodiment>>

[Redox Flow Battery System]

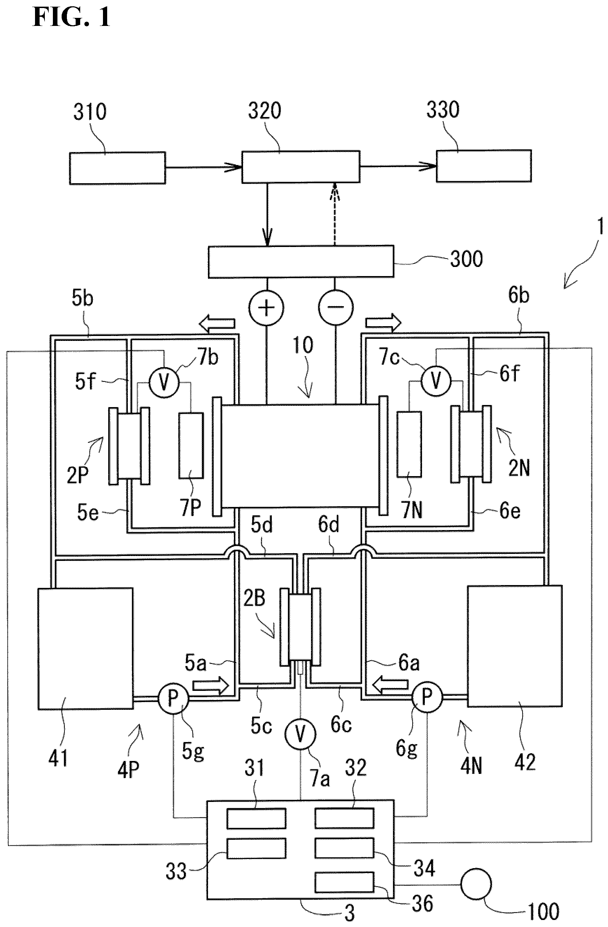

Referring to FIG. 1, a redox flow battery system 1 of first embodiment will be described. Redox flow battery system 1 includes a main cell 10, a plurality of monitor cells, and a controller 3. Main cell 10 performs charging and discharging. Main cell 10 is supplied with a positive electrolyte and a negative electrolyte. Controller 3 controls charging and discharging of main cell 10. One of the features of redox flow battery system 1 is that controller 3 issues an operation command to an alarm device 100 when a specific condition is satisfied.

[Overview]

Redox flow battery system 1 charges and stores the power generated by a power generation unit 310, discharges the stored power, and supplies the discharged power to a load 330. Redox flow battery system 1 is typically connected to an alternating current/direct current converter 300. Alternating current/direct current converter 300 is connected to a transformer facility 320. Transformer facility 320 is connected to power generation unit 310 and load 330. An example of power generation unit 310 is a solar photovoltaic power generator, a wind power generator, or other general power generation plants. An example of load 330 is a consumer of the power. A solid line arrow extending from transformer facility 320 to alternating current/direct current converter 300 means charging. A dashed line arrow extending from alternating current/direct current converter 300 to transformer facility 320 means discharging. Redox flow battery system 1 uses the positive electrolyte and the negative electrolyte. The positive electrolyte and the negative electrolyte contain ions whose valence changes by oxidation and reduction as active materials. Charging or discharging of redox flow battery system 1 is performed by using a difference between an oxidation-reduction potential of ions included in the positive electrolyte and an oxidation-reduction potential of ions included in the negative electrolyte. An example of the use of redox flow battery system 1 is load leveling, instantaneous voltage drop compensation, emergency power supply, or output smoothing of natural energy. Natural energy is energy obtained by solar power generation or wind power generation.

[Main Cell]

Main cell 10 performs charging and discharging. Main cell 10 is connected to alternating current/direct current converter 300. Although not shown, main cell 10 is divided into a positive electrode cell and a negative electrode cell by a membrane. The membrane is an ion-exchange membrane that does not transmit electrons but transmits, for example, hydrogen ions. The positive electrode cell includes a positive electrode. The positive electrolyte is flowed in the positive electrode cell by a positive electrolyte circulation mechanism 4P described later. The negative electrode cell includes a negative electrode. The negative electrolyte is flowed in the negative electrode cell by a negative electrolyte circulation mechanism 4N described later. Main cell 10 can have a known configuration. Main cell 10 is usually formed inside a structure called a cell stack.

The cell stack includes a substack, two end plates, and a fastening mechanism. The substack includes a layered body and two supply/drainage plates. The layered body is formed by stacking a cell frame, a positive electrode, a membrane, and a negative electrode in this order. One main cell 10 is formed between adjacent cell frames. The supply/drainage plates are disposed at both ends of the layered body. The supply/drainage plate is connected to a first supply pipe 5a and a first discharge pipe 5b of positive electrolyte circulation mechanism 4P and a second supply pipe 6a and a second discharge pipe 6b of negative electrolyte circulation mechanism 4N. The number of the substacks may be one or more. The two end plates sandwich the plurality of substack from the outside of the substack at both ends. The fastening mechanism fastens both end plates. The cell stack can have a known configuration.

[Positive Electrolyte Circulation Mechanism · Negative Electrolyte Circulation Mechanism]

Positive electrolyte circulation mechanism 4P includes a positive electrolyte tank 41, first supply pipe 5a, first discharge pipe 5b, and a first pump 5g. Positive electrolyte tank 41 stores a positive electrolyte. The positive electrolyte is flowed through first supply pipe 5a and first discharge pipe 5b. First supply pipe 5a connects positive electrolyte tank 41 and the positive electrode cell. First discharge pipe 5b connects the positive electrode cell and positive electrolyte tank 41. First pump 5g pressure-feeds the positive electrolyte in positive electrolyte tank 41. First pump 5g is provided in the middle of first supply pipe 5a.

Negative electrolyte circulation mechanism 4N includes a negative electrolyte tank 42, second supply pipe 6a, second discharge pipe 6b, and a second pump 6g. Negative electrolyte tank 42 stores a negative electrolyte. The negative electrolyte is flowed through second supply pipe 6a and second discharge pipe 6b. Second supply pipe 6a connects negative electrolyte tank 42 and the negative electrode cell. Second discharge pipe 6b connects the negative electrode cell and negative electrolyte tank 42. Second pump 6g pressure-feeds the negative electrolyte in negative electrolyte tank 42. Second pump 6g is provided in the middle of second supply pipe 6a.

[Electrolyte]

The positive active material contained in the positive electrolyte, the solvent of the positive electrolyte, the negative active material contained in the negative electrolyte, and the solvent of the negative electrolyte are not particularly limited. The positive active material is, for example, one or more selected from the group consisting of manganese ions, vanadium ions, iron ions, polyacids, quinone derivatives, and amines. The negative active material is, for example, one or more selected from the group consisting of titanium ions, vanadium ions, chromium ions, polyacids, quinone derivatives, and amines. In a specific example, both the positive electrolyte and the negative electrolyte contain vanadium ions. The solvent of the positive electrolyte and the negative electrolyte is, for example, an aqueous solution containing one or more acids or acid salts selected from the group consisting of sulfuric acid, phosphoric acid, nitric acid, and hydrochloric acid.

[Monitor Cell]

The plurality of monitor cells are selected from a group consisting of a bipolar monitor cell 2B, a positive monitor cell 2P, and a negative monitor cell 2N. Unlike main cell 10, each monitor cell is not connected to alternating current/direct current converter 300 and does not perform charging and discharging. Redox flow battery system 1 may include at least two monitor cells among the three monitor cells of bipolar monitor cell 2B, positive monitor cell 2P, and negative monitor cell 2N. In FIG. 1, an example is shown in which redox flow battery system 1 includes all of bipolar monitor cell 2B, positive monitor cell 2P, and negative monitor cell 2N. Although not shown, unlike FIG. 1, for example, redox flow battery system 1 may not include positive monitor cell 2P, and may include bipolar monitor cell 2B and negative monitor cell 2N.

(Bipolar Monitor Cell)

Bipolar monitor cell 2B is supplied with the positive electrolyte and the negative electrolyte, the positive electrolyte being common to the positive electrolyte supplied to main cell 10 and the negative electrolyte being common to the negative electrolyte supplied to main cell 10. The configuration of bipolar monitor cell 2B is the same as that of main cell 10. Bipolar monitor cell 2B of the embodiment is provided independently of main cell 10. Unlike the embodiment, main cell 10 and bipolar monitor cell 2B may be integrally provided in the cell stack. In this case, bipolar monitor cell 2B is disposed at an end of the layered body.

Bipolar monitor cell 2B of the embodiment is provided in the middle of the circulation path of the positive electrolyte and the negative electrolyte. In the embodiment, the supply of the positive electrolyte and the negative electrolyte to bipolar monitor cell 2B and the discharge of the positive electrolyte and the negative electrolyte from bipolar monitor cell 2B are performed by a third supply pipe 5c, a third discharge pipe 5d, a fourth supply pipe 6c, and a fourth discharge pipe 6d. Third supply pipe 5c connects first supply pipe 5a and the positive electrode cell of bipolar monitor cell 2B. Third discharge pipe 5d connects the positive electrode cell of bipolar monitor cell 2B and first discharge pipe 5b. Fourth supply pipe 6c connects second supply pipe 6a and the negative electrode cell of bipolar monitor cell 2B. Fourth discharge pipe 6d connects the negative electrode cell of bipolar monitor cell 2B and second discharge pipe 6b.

A first potential measuring device 7a is connected to bipolar monitor cell 2B. First potential measuring device 7a measures a potential difference between the potential of the positive electrolyte flowed through the positive electrode cell and the potential of the negative electrolyte flowed through the negative electrode cell in bipolar monitor cell 2B. The measured potential difference corresponds to the open circuit voltage VR of redox flow battery system 1. An example of first potential measuring device 7a is a voltmeter. The measurement result by first potential measuring device 7a is transmitted to controller 3. The measurement result is transmitted by wireless communication or wired communication. First potential measuring device 7a includes a wireless communication device or is connected to a signal line connected to controller 3.

(Positive Monitor Cell)

Positive monitor cell 2P is supplied with only the positive electrolyte which is common to the positive electrolyte supplied to main cell 10. That is, the negative electrolyte which is common to the negative electrolyte supplied to main cell 10 is not supplied to positive monitor cell 2P. Positive monitor cell 2P has the same configuration as main cell 10. Positive monitor cell 2P of the embodiment is provided independently of main cell 10. Positive monitor cell 2P of the embodiment is also provided independently of bipolar monitor cell 2B.

Positive monitor cell 2P of the embodiment is provided in the middle of the circulation path of the positive electrolyte. The supply of the positive electrolyte to positive monitor cell 2P and the discharge of the positive electrolyte from positive monitor cell 2P are performed by a fifth supply pipe 5e and a fifth discharge pipe 5f. Fifth supply pipe 5e connects first supply pipe 5a and positive monitor cell 2P. Fifth supply pipe 5e is connected to first supply pipe 5a at a position downstream of the connection point between first supply pipe 5a and third supply pipe 5c. The downstream of the connection point between first supply pipe 5a and third supply pipe 5c refers to a position closer to main cell 10 than the connection point between first supply pipe 5a and third supply pipe 5c. Fifth discharge pipe 5f connects positive monitor cell 2P and first discharge pipe 5b. Fifth discharge pipe 5f is connected to first discharge pipe 5b at a position upstream of the connection point between first discharge pipe 5b and third discharge pipe 5d. The upstream of the connection point between first discharge pipe 5b and third discharge pipe 5d refers to a position closer to main cell 10 than the connection point between first discharge pipe 5b and third discharge pipe 5d.

A reference positive electrode 7P having a known potential is connected to positive monitor cell 2P. An example of reference positive electrode 7P is a silver-silver chloride electrode or a mercury- mercurous sulfate electrode. A second potential measuring device 7b is connected between positive monitor cell 2P and reference positive electrode 7P. Second potential measuring device 7b measures a potential difference between the potential of the positive electrolyte flowed in positive monitor cell 2P and the potential of reference positive electrode 7P. The measured potential difference is used as an absolute potential VP of the positive electrolyte itself supplied to positive monitor cell 2P. An example of second potential measuring device 7b is a voltmeter. The measurement result by second potential measuring device 7b is transmitted to controller 3. The measurement result is transmitted by wireless communication or wired communication. Second potential measuring device 7b includes a wireless communication device or is connected to a signal line connected to controller 3.

(Negative Monitor Cell)

Negative monitor cell 2N is supplied with only the negative electrolyte which is common to the negative electrolyte supplied to main cell 10. That is, the positive electrolyte which is common to the positive electrolyte supplied to main cell 10 is not supplied to negative monitor cell 2N. Negative monitor cell 2N has the same configuration as main cell 10. Negative monitor cell 2N of the embodiment is provided independently of main cell 10. Negative monitor cell 2N of the embodiment is provided independently of bipolar monitor cell 2B.

Negative monitor cell 2N of the embodiment is provided in the middle of the circulation path of the negative electrolyte. The supply of the negative electrolyte to negative monitor cell 2N and the discharge of the negative electrolyte from negative monitor cell 2N are performed by a sixth supply pipe 6e and a sixth discharge pipe 6f. Sixth supply pipe 6e connects second supply pipe 6a and negative monitor cell 2N. Sixth supply pipe 6e is connected to second supply pipe 6a at a position downstream of the connection point between second supply pipe 6a and fourth supply pipe 6c. The downstream of the connection point between second supply pipe 6a and fourth supply pipe 6c refers to a position closer to main cell 10 than the connection point between second supply pipe 6a and fourth supply pipe 6c. Sixth discharge pipe 6f connects negative monitor cell 2N and second discharge pipe 6b. Sixth discharge pipe 6f is connected to second discharge pipe 6b at a position upstream of the connection point between second discharge pipe 6b and fourth discharge pipe 6d. The upstream of the connection point between second discharge pipe 6b and fourth discharge pipe 6d refers to a position closer to main cell 10 than the connection point between second discharge pipe 6b and fourth discharge pipe 6d.

A reference negative electrode 7N having a known potential is connected to negative monitor cell 2N. An example of reference negative electrode 7N is a silver-silver chloride electrode or a mercury- mercurous sulfate electrode. A third potential measuring device 7c is connected between negative monitor cell 2N and reference negative electrode 7N. Third potential measuring device 7c measures a potential difference between the potential of the negative electrolyte flowed in negative monitor cell 2N and the potential of reference negative electrode 7N. The measured potential difference is used as an absolute potential VN of the negative electrolyte itself supplied to negative monitor cell 2N. An example of third potential measuring device 7c is a voltmeter. The measurement result by third potential measuring device 7c is transmitted to controller 3. The measurement result is transmitted by wireless communication or wired communication. Third potential measuring device 7c includes a wireless communication device or is connected to a signal line connected to controller 3.

When main cell 10 performs charging or discharging, a pump controller 34, which will be described later, drives first pump 5g and second pump 6g. First pump 5g is driven, and thus the positive electrolyte in positive electrolyte tank 41 flows to first supply pipe 5a. A part of the positive electrolyte flowing through first supply pipe 5a flows through the positive electrode cell of main cell 10, first discharge pipe 5b, and positive electrolyte tank 41 in this order. Another part of the positive electrolyte flowing through first supply pipe 5a flows through third supply pipe 5c, the positive electrode cell of bipolar monitor cell 2B, third discharge pipe 5d, first discharge pipe 5b, and positive electrolyte tank 41 in this order. Still another part of the positive electrolyte flowing through first supply pipe 5a flows through fifth supply pipe 5e, positive monitor cell 2P, fifth discharge pipe 5f, first discharge pipe 5b, and positive electrolyte tank 41 in this order. Second pump 6g is driven, and thus the negative electrolyte in negative electrolyte tank 42 flows to second supply pipe 6a. A part of the negative electrolyte flowing through second supply pipe 6a flows through the negative electrode cell of main cell 10, second discharge pipe 6b, and negative electrolyte tank 42 in this order. Another part of the negative electrolyte flowing through second supply pipe 6a flows through fourth supply pipe 6c, the negative electrode cell of bipolar monitor cell 2B, fourth discharge pipe 6d, second discharge pipe 6b, and negative electrolyte tank 42 in this order. Still another part of the negative electrolyte flowing through second supply pipe 6a flows through sixth supply pipe 6e, negative monitor cell 2N, sixth discharge pipe 6f, second discharge pipe 6b, and negative electrolyte tank 42 in this order. In a standby state in which charging and discharging are not performed, first pump 5g and second pump 6g are stopped. That is, the positive electrolyte and the negative electrolyte are not circulated.

[Controller]

Controller 3 controls each unit necessary for the operation of redox flow battery system 1. Controller 3 controls charging and discharging of main cell 10. Each process performed by controller 3 is achieved by a processing circuit (circuitry) including one or more processors.

The processing circuit may be configured by an integrated circuit or the like in which one or a plurality of memories, various analog circuits, and various digital circuits are combined in addition to the one or the plurality of processors, and may include an input/output interface (I/F). The one or more memories store a program (instructions) for causing the one or more processors to execute each of the processes. The one or more memories are typically a ROM (Read-Only Memory) and a RAM (Random Access Memory).

The one or more processors may execute the processes in accordance with the program read from the one or more memories, or may execute the processes in accordance with a logic circuit designed in advance to execute the processes. The processor may be any of various processors suitable for control of a computer, such as a central processing unit (CPU), a graphics processing unit (GPU), a digital signal processor (DSP), a field programmable gate array (FPGA), and an application specific integrated circuit (ASIC). The plurality of processors physically separated from each other may execute the processes in cooperation with each other. For example, the processors mounted on a plurality of physically separated computers may execute each of the processes in cooperation with each other via a network such as a local area network (LAN), a wide area network (WAN), or the Internet.

The program may be installed in the memory from an external server device or the like via the network, or may be distributed in a state of being stored in a recording medium such as a compact disc read only memory (CD-ROM), a digital versatile disk read only memory (DVD-ROM), or a semiconductor memory and installed in the memory from the recording medium.

Controller 3 of the embodiment includes a calculation device 31, a storage device 32, a determination device 33, pump controller 34, and an alarm controller 36. The program includes program codes related to the process of performing a specific calculation by calculation device 31, the process of determining whether a specific condition is satisfied based on the calculation result by determination device 33, the process of issuing an operation command to alarm device 100 based on the determination by alarm controller 36, and the process of driving or stopping first pump 5g and second pump 6g based on the operation command issued to alarm device 100 by pump controller 34.

Determination device 33 determines whether or not a specific condition is satisfied. The specific condition is any one of the following first condition to fourth condition. That is, determination device 33 determines whether or not any of the first condition to the fourth condition is satisfied.

The first condition is that a calculated value A2 of the amount of change in the charging molar concentration of the active material of the positive electrolyte is deviated from a measured value A1 of the amount of change in the charging molar concentration of the active material of the positive electrolyte by a predetermined value or more. The second condition is that a calculated value A4 of the amount of change in the charging molar concentration of the active material of the negative electrolyte is deviated from a measured value A3 of the amount of change in the charging molar concentration of the active material of the negative electrolyte by a predetermined value or more. The third condition is that a calculated value A6 of the liquid amount ratio of the positive electrolyte to the negative electrolyte is deviated from a set value A5 of the liquid amount ratio of the positive electrolyte to the negative electrolyte by a predetermined value or more. The fourth condition is that a calculated value A8 of the liquid amount ratio of the negative electrolyte to the positive electrolyte is deviated from a set value A7 of the liquid amount ratio of the negative electrolyte to the positive electrolyte by a predetermined value or more.

Satisfying any of the first condition to the fourth condition regardless of the charging state is a sign that there is a high possibility that overcharging will occur in the future when redox flow battery system 1 continues to operate. The expression "regardless of the charging state" means not only a case where the charging state is high, for example, 80%, but also a case where the charging state is low, for example, 70% or less, 60% or less, or 50% or less. Redox flow battery system 1 can detect the sign by the determination by controller 3 that any one of the first condition to the fourth condition is satisfied. Thus, redox flow battery system 1 can predict that overcharging will occur regardless of the charging state. Redox flow battery system 1 capable of predicting the occurrence of overcharging can prevent the occurrence of overcharging.

Storage device 32 includes a first storage device, a second storage device, a third storage device, and a fourth storage device. The first storage device stores the charging molar concentration of the active material of the positive electrolyte corresponding to potential VP of the positive electrolyte itself. The charging molar concentration of the active material of the positive electrolyte corresponding to potential VP of the positive electrolyte itself is a value obtained in advance. The second storage device stores the charging molar concentration of the active material of the negative electrolyte corresponding to potential VN of the negative electrolyte itself. The charging molar concentration of the active material of the negative electrolyte corresponding to potential VN of the negative electrolyte itself is a value obtained in advance. The third storage device stores the set value A5 of the liquid amount ratio of the positive electrolyte to the negative electrolyte. The set value A5 is a value obtained in advance. The fourth storage device stores the set value A7 of the liquid amount ratio of the negative electrolyte to the positive electrolyte. The set value A7 is a value obtained in advance.

Calculation device 31 includes a first calculation device, a second calculation device, a third calculation device, a fourth calculation device, a fifth calculation device, and a sixth calculation device.

The first calculation device obtains the measured value A1 of the amount of change in the charging molar concentration of the active material of the positive electrolyte. The measured value A1 is a difference between a measured value CP1 of the charging molar concentration of the active material of the positive electrolyte at the first time point and a measured value CP2 of the charging molar concentration of the active material of the positive electrolyte at the second time point, that is, "CP2 - CP1".

A measured value CPn of the charging molar concentration of the active material of the positive electrolyte at a certain time point is the charging molar concentration of the active material of the positive electrolyte corresponding to potential VP of the positive electrolyte itself at a certain time point. The charging molar concentration of the active material of the positive electrolyte corresponding to potential VP of the positive electrolyte itself is stored in the first storage device. In the case where positive monitor cell 2P is provided, potential VP of the positive electrolyte itself is obtained by positive monitor cell 2P. When positive monitor cell 2P is not provided, potential VP of the positive electrolyte itself is obtained by the sum of an open circuit voltage VR of redox flow battery system 1 obtained by bipolar monitor cell 2B and potential VN of the negative electrolyte itself obtained by negative monitor cell 2N, that is, "VR + VN".

The second calculation device obtains the calculated value A2 of the amount of change in the charging molar concentration of the active material of the positive electrolyte. The calculated value A2 is obtained by multiplying the measured value A3 of the amount of change in the charging molar concentration of the active material of the negative electrolyte by the set value A5 of the liquid amount ratio of the positive electrolyte to the negative electrolyte, that is, "A3 × A5". The set value A5 is obtained by "(set value of liquid amount of positive electrolyte)/(set value of liquid amount of negative electrolyte)". The set value A5 is stored in the third storage device.

The measured value A3 is obtained by the third calculation device. The measured value A3 is a difference between a measured value CN1 of the charging molar concentration of the active material in the negative electrolyte at the first time point and a measured value CN2 of the charging molar concentration of the active material in the negative electrolyte at the second time point, that is, "CN2 - CN1".

A measured value CNn of the charging molar concentration of the active material of the negative electrolyte at a certain time point is the charging molar concentration of the active material of the negative electrolyte corresponding to potential VN of the negative electrolyte itself at a certain time point. The charging molar concentration of the active material of the negative electrolyte corresponding to potential VN of the negative electrolyte itself is stored in the second storage device. In the case where negative monitor cell 2N is provided, potential VN of the negative electrolyte itself is obtained by negative monitor cell 2N. When negative monitor cell 2N is not provided, potential VN of the negative electrolyte itself is obtained by the difference between potential VP of the positive electrolyte itself obtained by positive monitor cell 2P and open circuit voltage VR of redox flow battery system 1 obtained by bipolar monitor cell 2B, that is, "VP - VR".

The fourth calculation device obtains the calculated value A4 of the amount of change in the charging molar concentration of the active material of the negative electrolyte. The calculated value A4 is obtained by multiplying the measured value A1 of the amount of change in the charging molar concentration of the active material of the positive electrolyte by the set value A7 of the liquid amount ratio of the negative electrolyte to the positive electrolyte, that is, "A1 × A7". The set value A7 is obtained by "(set value of liquid amount of negative electrolyte)/(set value of liquid amount of positive electrolyte)". The set value A7 is stored in the fourth storage device.

The fifth calculation device obtains the calculated value A6 of the liquid amount ratio of the positive electrolyte to the negative electrolyte. The calculated value A6 is obtained by a ratio of the measured value A1 of the amount of change in the charging molar concentration of the active material of the positive electrolyte to the measured value A3 of the amount of change in the charging molar concentration of the active material of the negative electrolyte, that is, "(CP2 - CP1)/CN2 - CN1)".

The sixth calculation device obtains the calculated value A8 of the liquid amount ratio of the negative electrolyte to the positive electrolyte. The calculated value A8 is obtained by a ratio of the measured value A3 of the amount of change in the charging molar concentration of the active material of the negative electrolyte to the measured value A1 of the amount of change in the charging molar concentration of the active material of the positive electrolyte, that is, "(CN2 - CN1) (CP2 - CP1)".

Pump controller 34 drives and stops first pump 5g and second pump 6g.

Alarm controller 36 issues an operation command to alarm device 100. That is, alarm controller 36 drives and stops alarm device 100.

[Alarm Device]

Alarm device 100 is a device that issues an alarm. Alarm device 100 can notify the worker who operates redox flow battery system 1 that the specific condition is satisfied. That is, alarm device 100 can notify the worker that the sign is shown. The worker can prepare for measures to prevent a failure due to overcharging before the overcharging occurs. Moreover, the worker can maximize the charging time or discharging time of redox flow battery system 1. The worker can perform a stop operation of charging or discharging. When the charging or discharging is stopped, the occurrence of the overcharging is prevented more reliably. Alarm device 100 is, for example, at least one of a device that can be visually checked or a device that can be aurally checked. The device that can be visually checked is, for example, an illumination device such as a lamp or a display device such as a monitor that displays characters, symbols, or the like. The device that allows auditory confirmation is, for example, a sound output device such as a buzzer or a speaker.

[Method of Operating Redox Flow Battery System]

The method of operating redox flow battery system of the embodiment uses redox flow battery system 1 of the embodiment, and supplies the positive electrolyte and the negative electrolyte to main cell 10 to be charged and discharged. The method of operating redox flow battery system of the embodiment includes the first method or the second method. The first method includes a process P1, a process P2, a process P3, and a process P4A. The first method may further include a process P4B. The process P4B is performed after the process P4A. The second method includes the process P1, the process P2, a process P5, and a process P6A. The second method may further include a process P6B. The process P6B is performed after the process P6A.

In the process P1, the measured value A1 of the amount of change in the charging molar concentration of the active material of the positive electrolyte is obtained. In the process P2, the measured value A3 of the amount of change in the charging molar concentration of the active material of the negative electrolyte is obtained.

In the process P3, the calculated value A2 of the amount of change in the charging molar concentration of the active material of the positive electrolyte is obtained. Alternatively, in the process P3, the calculated value A4 of the amount of change in the charging molar concentration of the active material of the negative electrolyte is obtained. In the process P4A, when the calculated value A2 is deviated from the measured value A1 by a predetermined value or more, an operation command is issued to alarm device 100. Alternatively, in the process P4A, when the calculated value A4 is deviated from the measured value A3 by a predetermined value or more, an operation command is issued to alarm device 100. Alarm device 100 that has received the operation command issues an alarm to the worker. In the process P4B, the charging or discharging of main cell 10 is stopped. When stopping the charging or discharging of main cell 10, first pump 5g and second pump 6g are stopped by pump controller 34.

In the process P5, the calculated value A6 of the liquid amount ratio of the positive electrolyte to the negative electrolyte is obtained. Alternatively, in the process P5, the calculated value A8 of the liquid amount ratio of the negative electrolyte to the positive electrolyte is obtained. In the process P6A, when the calculated value A6 is deviated from the set value A5 by a predetermined value or more, an operation command is issued to alarm device 100. Alternatively, in the process P6A, when the calculated value A8 is deviated from the set value A7 by a predetermined value or more, the operation command is issued to alarm device 100. Alarm device 100 that has received the operation command issues an alarm to the worker. In the process P6B, the charging or discharging of main cell 10 is stopped. When stopping the charging or discharging of main cell 10, first pump 5g and second pump 6g are stopped by pump controller 34.

[Control Procedure]

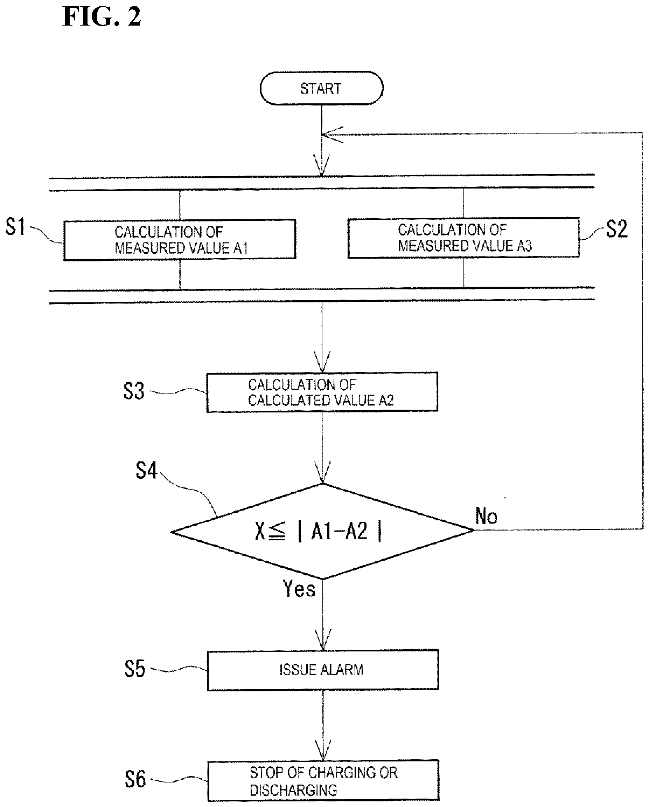

The control procedure by controller 3 during operation will be described. Controller 3 performs steps S1 to S5 shown in FIG. 2. Controller 3 may end the control after performing the step S5, or may end the control after further performing a step S6 without ending the control after performing the step S5.

In the step S1, the measured value A1 is calculated. The step S1 corresponds to the above-described the process P1. The step S2, the measured value A3 is calculated. The step S2 corresponds to the above-described process P2. The step S1 and the step S2 are processed in parallel. In the step S3, the calculated value A2 is calculated. The step S3 corresponds to the above-described process P3. In the step S4, it is determined whether or not the calculated value A2 is deviated from the measured value A1 by a predetermined value X or more. In the step S5, when the condition in the step S4 is satisfied, an operation command is issued to alarm device 100. Alarm device 100 that has received the operation command issues an alarm to the worker. The step S4 and the step S5 correspond to the above-described process P4A. In the step S6, the charging or discharging is stopped. The step S6 corresponds to the process P4B. When the condition of the step S4 is not satisfied, alarm device 100 is not driven, and charging or discharging is maintained without issuing an alarm. Unlike the embodiment, the step S1 and the step S2 may be processed back and forth in time as long as they are processed before the step S3.

In the step S3, the calculated value A4 may be calculated instead of the calculated value A2. This step S3 corresponds to the process P3. In this case, in the step S4, it is determined whether or not the calculated value A4 is deviated from the measured value A3 by a predetermined value or more. This step S4 corresponds to the above-described process P4A.

In the step S3, the calculated value A6 may be calculated instead of the calculated value A2. This step S3 corresponds to the process P5. In this case, in the step S4, it is determined whether or not the calculated value A6 is deviated from the set value A5 by a predetermined value or more. This step S4 corresponds to the process P6A.

In the step S3, the calculated value A8 may be calculated instead of the calculated value A2. This step S3 corresponds to the process P5. In this case, in the step S4, it is determined whether or not the calculated value A8 is deviated from the set value A7 by a predetermined value or more. This step S4 corresponds to the process P6A.

Redox flow battery system 1 and the method of operating the redox flow battery system can detect a sign that there is a high possibility that overcharging will occur in the future regardless of the charging state when redox flow battery system 1 continues to operate by performing the step S1 to the step S5. Thus, redox flow battery system 1 and the method of operating the redox flow battery system can predict that overcharging will occur regardless of the charging state. In redox flow battery system 1 and the method of operating the redox flow battery system, alarm device 100 issues an alarm by issuing the operation command to alarm device 100, and thus it is possible to notify the worker who operates redox flow battery system 1 that the sign is observed. The worker can prepare for measures to prevent a failure due to overcharging before the overcharging occurs. Moreover, the worker can maximize the use time of redox flow battery system 1. The worker can perform a stop operation of charging or discharging. When the charging or discharging is stopped, the occurrence of the overcharging is prevented more reliably. Redox flow battery system 1 and the method of operating the redox flow battery system can automatically stop charging or discharging without the worker performing the stop operation of charging or discharging by performing the step S6 after the step S5. Thus, redox flow battery system 1 and the method of operating a redox flow battery system can automatically prevent the occurrence of overcharging.

<<Second embodiment>>

[Redox Flow Battery System]

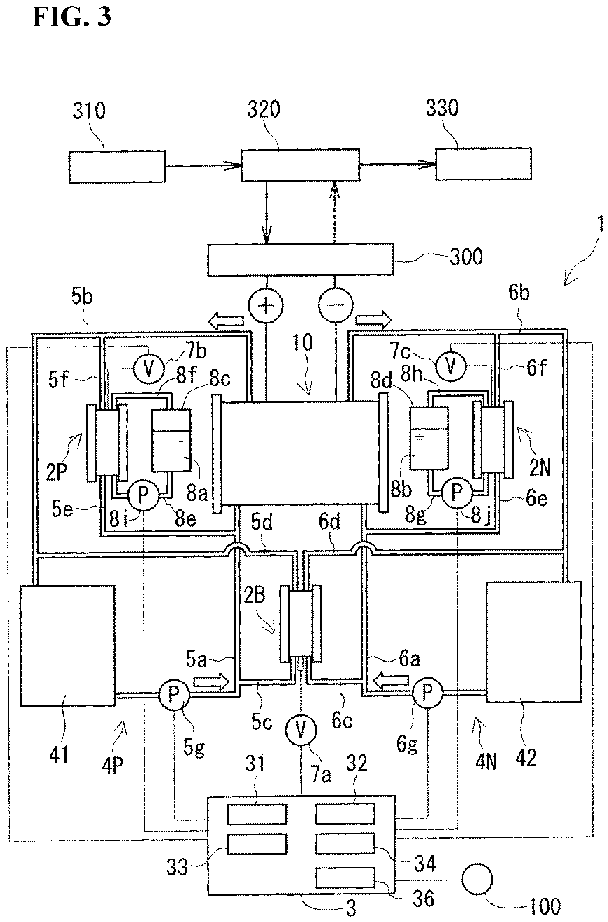

Referring to FIG. 3, redox flow battery system 1 of second embodiment will be described. Redox flow battery system 1 of the second embodiment is different from redox flow battery system 1 of the first embodiment in that redox flow battery system 1 of the second embodiment does not include the reference positive electrode and the reference negative electrode, but includes a reference positive electrolyte 8a and a reference negative electrolyte 8b. FIG. 3 shows an example in which both reference positive electrolyte 8a and reference negative electrolyte 8b are provided. Although not shown, unlike FIG. 3, either one of reference positive electrolyte 8a or reference negative electrolyte 8b may be provided. For example, redox flow battery system 1 may not include positive monitor cell 2P and reference positive electrolyte 8a, but may include bipolar monitor cell 2B, negative monitor cell 2N, and reference negative electrolyte 8b. The following description will be made focusing on the differences from the first embodiment. The description of the same configuration and the same effect as those of the first embodiment may be omitted.

(Positive Monitor Cell)

Although not shown, positive monitor cell 2P is separated into a positive electrode cell and a reference cell by a membrane. Reference positive electrolyte 8a is flowed in the reference cell of positive monitor cell 2P. Reference positive electrolyte 8a is stored in a first tank 8c. Reference positive electrolyte 8a is circulated between positive monitor cell 2P and first tank 8c by a seventh supply pipe 8e, a seventh discharge pipe 8f, and a third pump 8i. Seventh supply pipe 8e connects first tank 8c and the reference cell of positive monitor cell 2P. Seventh discharge pipe 8f connects the reference cell of positive monitor cell 2P and first tank 8c. Third pump 8i pressure-feeds reference positive electrolyte 8a in first tank 8c. Third pump 8i is provided in the middle of seventh supply pipe 8e. The driving or stopping of third pump 8i is controlled by pump controller 34. Second potential measuring device 7b measures a potential difference between the potential of the positive electrolyte flowed in the positive electrode cell of positive monitor cell 2P and the potential of reference positive electrolyte 8a flowed in the reference cell of positive monitor cell 2P. The measured potential difference is used as absolute potential VP of the positive electrolyte itself supplied to positive monitor cell 2P.

(Negative Monitor Cell)

Negative monitor cell 2N is separated into a negative electrode cell and a reference cell by a membrane, although not shown. The reference cell of negative monitor cell 2N is supplied with reference negative electrolyte 8b. Reference negative electrolyte 8b is stored in a second tank 8d. Reference negative electrolyte 8b is circulated between negative monitor cell 2N and second tank 8d by an eighth supply pipe 8g, an eighth discharge pipe 8h, and a fourth pump 8j. Eighth supply pipe 8g connects second tank 8d and the reference cell of negative monitor cell 2N. Eighth discharge pipe 8h connects the reference cell of negative monitor cell 2N and second tank 8d. Fourth pump 8j pressure-feeds reference negative electrolyte 8b in second tank 8d. Fourth pump 8j is provided in the middle of eighth supply pipe 8g. The driving or stopping of fourth pump 8j is controlled by pump controller 34. Third potential measuring device 7c measures a potential difference between the potential of the negative electrolyte flowed through the negative electrode cell of negative monitor cell 2N and the potential of reference negative electrolyte 8b flowed through the reference cell of negative monitor cell 2N. The measured potential difference is used as absolute potential VN of the negative electrolyte itself supplied to negative monitor cell 2N.

Reference positive electrolyte 8a and reference negative electrolyte 8b are not particularly limited as long as the charging molar concentration of the active material is clearly known.

<<Third embodiment>>

[Redox Flow Battery System]

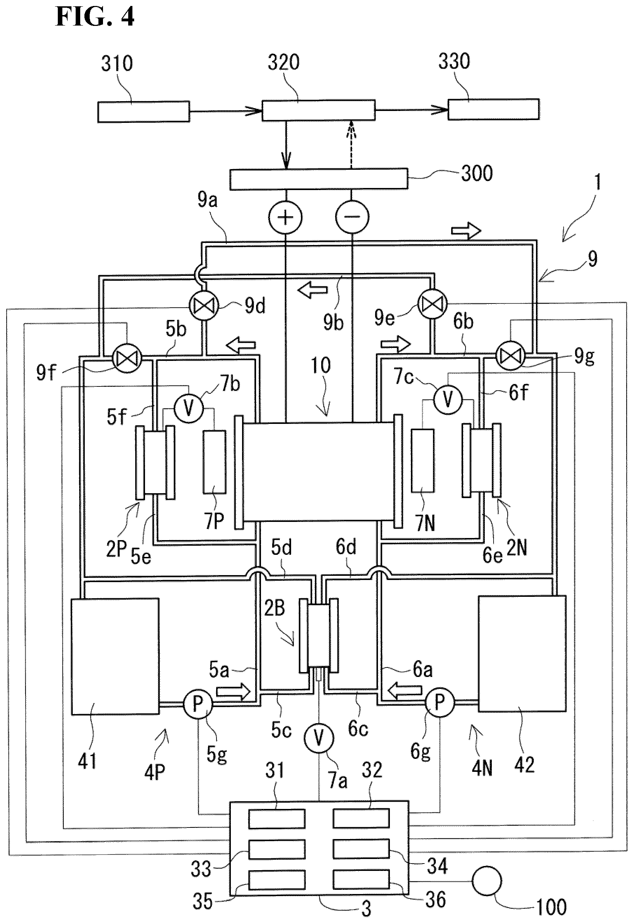

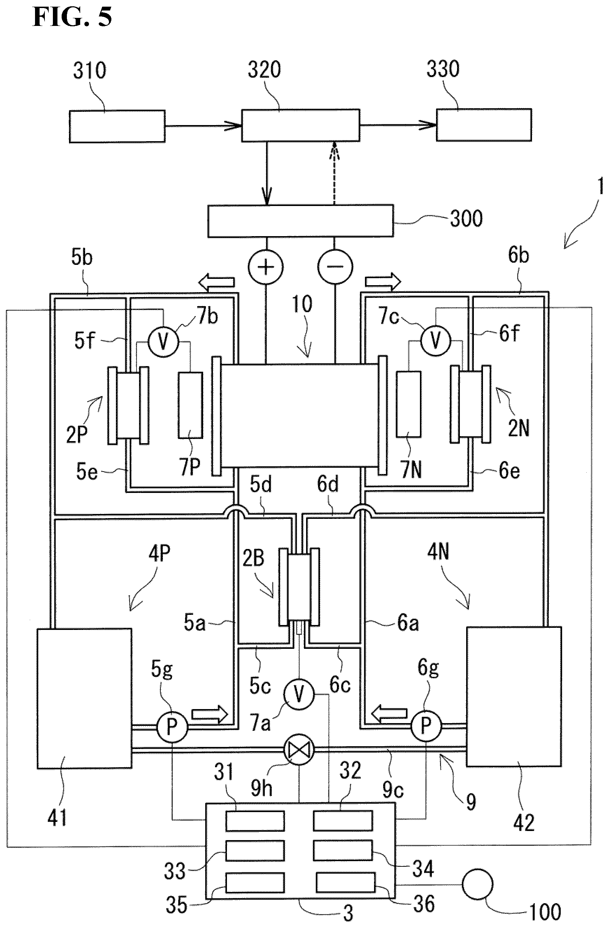

Redox flow battery system 1 of third embodiment will be described with reference to FIGS. 4 and 5. Redox flow battery system 1 of third embodiment is different from redox flow battery system 1 of first embodiment in a specific condition in which controller 3 issues operation command to alarm device 100. The following description will be made focusing on the differences from the first embodiment. The description of the same configuration and the same effect as those of the first embodiment may be omitted.

[Monitor Cell]

Redox flow battery system 1 of the embodiment may include at least two monitor cells of bipolar monitor cell 2B, positive monitor cell 2P, and negative monitor cell 2N. In FIGS. 4 and 5, an example is shown in which redox flow battery system 1 includes all of bipolar monitor cell 2B, positive monitor cell 2P, and negative monitor cell 2N. Although not shown, unlike FIGS. 4 and 5, for example, redox flow battery system 1 may not include positive monitor cell 2P, but may include bipolar monitor cell 2B and negative monitor cell 2N.

[Mixture Unit]

Redox flow battery system 1 of third embodiment has a mixture unit 9 for mixing a positive electrolyte and a negative electrolyte. Mixture unit 9 shown in FIG. 4 includes a first pipe 9a, a second pipe 9b, a first valve portion 9d, a second valve portion 9e, a third valve portion 9f, and a fourth valve portion 9g.

The positive electrolyte is flowed through first pipe 9a. First pipe 9a connects first discharge pipe 5b and second discharge pipe 6b. First pipe 9a is connected to first discharge pipe 5b at a position upstream of the connection point between first discharge pipe 5b and fifth discharge pipe 5f, and to second discharge pipe 6b at a position between the connection point between second discharge pipe 6b and fourth discharge pipe 6d and fourth valve portion 9g. The upstream of the connection point between first discharge pipe 5b and fifth discharge pipe 5f refers to a position closer to main cell 10 than the connection point between first discharge pipe 5b and fifth discharge pipe 5f.

The negative electrolyte is flowed through second pipe 9b. Second pipe 9b connects second discharge pipe 6b and first discharge pipe 5b. Second pipe 9b is connected to second discharge pipe 6b at a position upstream of the connection point between second discharge pipe 6b and sixth discharge pipe 6f, and to first discharge pipe 5b at a position between the connection point between first discharge pipe 5b and third discharge pipe 5d and third valve portion 9f. The upstream of the connection point between second discharge pipe 6b and sixth discharge pipe 6f refers to a position closer to main cell 10 than the connection point between second discharge pipe 6b and sixth discharge pipe 6f.

First valve portion 9d opens and closes first pipe 9a. First valve portion 9d is provided in first pipe 9a. Second valve portion 9e opens and closes second pipe 9b. Second valve portion 9e is provided in second pipe 9b. Third valve portion 9f opens and closes first discharge pipe 5b. Third valve portion 9f is provided in first discharge pipe 5b between a connection point between first discharge pipe 5b and fifth discharge pipe 5f and a connection point between first discharge pipe 5b and second pipe 9b. Fourth valve portion 9g opens and closes second discharge pipe 6b. Fourth valve portion 9g is provided in second discharge pipe 6b between a connection point between second discharge pipe 6b and sixth discharge pipe 6f and a connection point between second discharge pipe 6b and first pipe 9a. First valve portion 9d to fourth valve portion 9g are all electromagnetic valves. First valve portion 9d to fourth valve portion 9g all include a wireless communication device or is connected to a signal line connected to controller 3.

Unlike the example shown in FIG. 4, although not shown, the first to fourth valve portions may not be provided, and a first three-way valve provided at a connection point between first discharge pipe 5b and first pipe 9a in first discharge pipe 5b and a second three-way valve provided at a connection point between second discharge pipe 6b and second pipe 9b in second discharge pipe 6b may be provided. The first three-way valve selectively opens first discharge pipe 5b and closes first pipe 9a, or closes first discharge pipe 5b and opens first pipe 9a. The second three-way valve selectively opens second discharge pipe 6b and closes second pipe 9b, or closes second discharge pipe 6b and opens second pipe 9b.

Mixture unit 9 shown in FIG. 5 includes a third pipe 9c and a fifth valve portion 9h. Third pipe 9c connects positive electrolyte tank 41 and negative electrolyte tank 42. Third pipe 9c is connected to, for example, a lower portion of positive electrolyte tank 41 and a lower portion of negative electrolyte tank 42. Fifth valve portion 9h opens and closes third pipe 9c. Fifth valve portion 9h is provided in third pipe 9c. Fifth valve portion 9h is an electromagnetic valve. Fifth valve portion 9h includes a wireless communication device or is connected to a signal line connected to controller 3.

[Controller]

Determination device 33 included in controller 3 of the embodiment determines whether or not a specific condition is satisfied. The specific condition is the following fifth condition or sixth condition. That is, determination device 33 determines whether or not the fifth condition or the sixth condition is satisfied.

The fifth condition is that a calculated value A10 of the active material concentration ratio of the positive electrolyte to the negative electrolyte is deviated from a set value A9 of the active material concentration ratio of the positive electrolyte to the negative electrolyte by a predetermined value or more. The sixth condition is that a calculated value A12 of the active material concentration ratio of the negative electrolyte to the positive electrolyte is deviated from a set value A11 of the active material concentration ratio of the negative electrolyte to the positive electrolyte by a predetermined value or more.

Satisfying the fifth condition or the sixth condition regardless of the charging state is a sign that there is a high possibility that overcharging will occur in the future when redox flow battery system 1 continues to operate. Redox flow battery system 1 can detect the sign by the determination by controller 3 that the fifth condition or the sixth condition is satisfied. Thus, redox flow battery system 1 can predict that overcharging will occur regardless of the charging state. Redox flow battery system 1 capable of predicting the occurrence of overcharging can prevent the occurrence of overcharging.

Storage device 32 included in controller 3 of the embodiment includes a fifth storage device and a sixth storage device. The fifth storage device stores the set value A9 of the active material concentration ratio of the positive electrolyte to the negative electrolyte. The set value A9 is a value obtained in advance. The sixth storage device stores the set value A11 of the active material concentration ratio of the negative electrolyte to the positive electrolyte. The set value A11 is a value obtained in advance.

Calculation device 31 included in controller 3 of the embodiment includes a seventh calculation device and an eighth calculation device. The seventh calculation device obtains the calculated value A10 of the active material concentration ratio of the positive electrolyte to the negative electrolyte. The eighth calculation device obtains the calculated value A12 of the active material concentration ratio of the negative electrolyte to the positive electrolyte. The calculated value A10 is obtained by using the potential of the positive electrolyte itself, the potential of the negative electrolyte itself, and a set value A13 of the liquid amount ratio of the positive electrolyte to the negative electrolyte. The calculated value A12 is obtained by using the potential of the positive electrolyte itself, the potential of the negative electrolyte itself, and a set value A14 of the liquid amount ratio of the negative electrolyte to the positive electrolyte. The set value A13 and the set value A14 are obtained by making the liquid amount of the positive electrolyte and the liquid amount of the negative electrolyte uniform. The liquid amount of the positive electrolyte and the liquid amount of the negative electrolyte are made uniform by mixture unit 9, which will be described in detail later.

The calculated value A10 is obtained by "VL × (KN/KP)". The calculated value A12 is obtained by "(1/VL) × (KP/KN)".

VL: set value of liquid amount ratio of positive electrolyte to negative electrolyte A13
1/VL: set value of liquid amount ratio of negative electrolyte to positive electrolyte A14

$$KN = e^{\alpha 2}/(1 + e^{\alpha 2}) - e^{\alpha 1}/(1 + e^{\alpha 1})$$

$$KP = e^{\beta 2}/(1 + e^{\beta 2}) - e^{\beta 1}/(1 + e^{\beta 1})$$

$$\alpha 1 = (VN1 - EN0) \times \{(n \times F)/(R \times T)\}$$

$$\alpha 2 = (VN2 - EN0) \times \{(n \times F)/(R \times T)\}$$

$$\beta 1 = (VP1 - EP0) \times \{(n \times F)/(R \times T)\}$$

$$\beta 2 = (VP2 - EP0) \times \{(n \times F)/(R \times T)\}$$

VN1: potential of the negative electrolyte itself at the first time point
VN2: potential of the negative electrolyte itself at the second time point
EN0: oxidation-reduction standard potential of negative electrode
VP 1: potential of the positive electrolyte itself at the first time point
VP2: potential of positive electrolyte itself at the second time point
EP0: oxidation-reduction standard potential of positive electrode
N: number of electrons
F: Faraday constant
R: gas constant
T: temperature

"KN" and "KP" can be derived using the Nernst equation. In the case where negative monitor cell 2N is provided, a potential VN1 and a potential VN2 of the negative electrolyte itself are obtained by negative monitor cell 2N. When negative monitor cell 2N is not provided, the potential VN1 of the negative electrolyte itself is obtained by the difference between a potential VP1 of the positive electrolyte itself obtained by positive monitor cell 2P and an open circuit voltage VR1 of redox flow battery system 1 obtained by bipolar monitor cell 2B, that is, "VP1 - VR1". In the case where negative monitor cell 2N is not provided, the potential VN2 of the negative electrolyte itself is obtained by "VP2 - VR2". In the case where positive monitor cell 2P is provided, the potential VP1 of the positive electrolyte itself is obtained by positive monitor cell 2P. When positive monitor cell 2P is not provided, the potential VP1 of the positive electrolyte itself is obtained by the sum of the potential VN1 of the negative electrolyte itself obtained by negative monitor cell 2N and the open circuit voltage VR1 of redox flow battery system 1 obtained by bipolar monitor cell 2B, that is, "VR1 + VN1". In the case where positive monitor cell 2P is not provided, a potential VP2 of the positive electrolyte itself is obtained by "VR2 + VN2".

Controller 3 of the embodiment further includes a valve controller 35. Valve controller 35 shown in FIG. 4 controls opening and closing of first valve portion 9d to fourth valve portion 9g. Valve controller 35 shown in FIG. 5 controls the opening and closing of fifth valve portion 9h. The program stored in the memory of controller 3 includes program codes related to a process of opening and closing first valve portion 9d to fourth valve portion 9g or a process of opening and closing fifth valve portion 9h.

In the operation of main cell 10 performing charging or discharging in redox flow battery system 1 shown in FIG. 4, valve controller 35 closes first valve portion 9d and second valve portion 9e, and opens third valve portion 9f and fourth valve portion 9g. Pump controller 34 drives first pump 5g and second pump 6g. The flow paths of the positive electrolyte and the negative electrolyte are the same as those in the first embodiment.

When the set value A13 and the set value A14 are obtained in redox flow battery system 1 shown in FIG. 4, if there is a difference between the liquid level in positive electrolyte tank 41 and the liquid level in negative electrolyte tank 42, valve controller 35 closes third valve portion 9f and fourth valve portion 9g, and opens first valve portion 9d and second valve portion 9e. When the amount of the positive electrolyte in positive electrolyte tank 41 is larger than the amount of the negative electrolyte in negative electrolyte tank 42, pump controller 34 drives first pump 5g and stops second pump 6g. In this case, the positive electrolyte discharged from main cell 10 flows through first discharge pipe 5b, first pipe 9a, second discharge pipe 6b, and negative electrolyte tank 42 in this order. When the amount of the negative electrolyte in negative electrolyte tank 42 is larger than the amount of the positive electrolyte in positive electrolyte tank 41, pump controller 34 stops first pump 5g and drives second pump 6g. In this case, the negative electrolyte discharged from main cell 10 flows through second discharge pipe 6b, second pipe 9b, first discharge pipe 5b, and positive electrolyte tank 41 in this order. In any case, when the liquid level in positive electrolyte tank 41 and the liquid level in negative electrolyte tank 42 are aligned, valve controller 35 closes first valve portion 9d and second valve portion 9e, and opens third valve portion 9f and fourth valve portion 9g.

In the operation of main cell 10 performing charging or discharging in redox flow battery system 1 shown in FIG. 5, valve controller 35 closes fifth valve portion 9h. Pump controller 34 drives first pump 5g and second pump 6g. The flow paths of the positive electrolyte and the negative electrolyte are the same as those in the first embodiment.

When the set value A13 and the set value A14 are obtained in redox flow battery system 1 shown in FIG. 5, if there is a difference between the liquid level in positive electrolyte tank 41 and the liquid level in negative electrolyte tank 42, valve controller 35 opens fifth valve portion 9h. The electrolyte flows from the tank with a high liquid level to the tank with a low liquid level through third pipe 9c due to the pressure difference between the electrolyte in positive electrolyte tank 41 and the electrolyte in negative electrolyte tank 42. When the liquid level in positive electrolyte tank 41 and the liquid level in negative electrolyte tank 42 are aligned, the flow of the electrolyte in third pipe 9c is stopped. Valve controller 35 closes fifth valve portion 9h.

[Method of Operating Redox Flow Battery System]

The method of operating redox flow battery system of the embodiment uses redox flow battery system 1 of the embodiment. The method of operating redox flow battery system of the embodiment includes a process P7, a process P8, a process P9, and a process P10A. The method of operating redox flow battery system of the embodiment may further include a process P10B. A process 10B is performed after a process 10A.

In the process P7, potentials VP1 and VP2 of the positive electrolyte itself are obtained by positive monitor cell 2P. Alternatively, in the process P7, potentials VP1 and VP2 of the positive electrolyte itself are obtained by bipolar monitor cell 2B and negative monitor cell 2N. In the process P8, potentials VN1 and VN2 of the negative electrolyte itself are obtained by negative monitor cell 2N. Alternatively, in the process P8, potentials VN1 and VN2 of the negative electrolyte itself are obtained by bipolar monitor cell 2B and positive monitor cell 2P.

In the process P9, the calculated value A10 of the active material concentration ratio of the positive electrolyte to the negative electrolyte is obtained by potentials VP1 and VP2 of the positive electrolyte itself, potentials VN1 and VN2 of the negative electrolyte itself, and the set value A13 of the liquid amount ratio of the positive electrolyte to the negative electrolyte. Alternatively, in the process P9, the calculated value A12 of the active material concentration ratio of the negative electrolyte to the positive electrolyte is obtained by potentials VP1 and VP2 of the positive electrolyte itself, potentials VN1 and VN2 of the negative electrolyte, and the set value A14 of the liquid amount ratio of the negative electrolyte to the positive electrolyte.

In the process P10A, when the calculated value A10 of the active material concentration ratio of the positive electrolyte to the negative electrolyte is deviated from the set value A9 of the active material concentration ratio of the positive electrolyte to the negative electrolyte by a predetermined value or more, an operation command is issued to alarm device 100. Alternatively, in the process P10A, when the calculated value A12 of the active material concentration ratio of the negative electrolyte to the positive electrolyte is deviated from the set value A11 of the active material concentration ratio of the negative electrolyte to the positive electrolyte by a predetermined value or more, the operation command is issued to alarm device 100. In the process 10B, the charging or discharging of main cell 10 is stopped.

[Control Procedure]

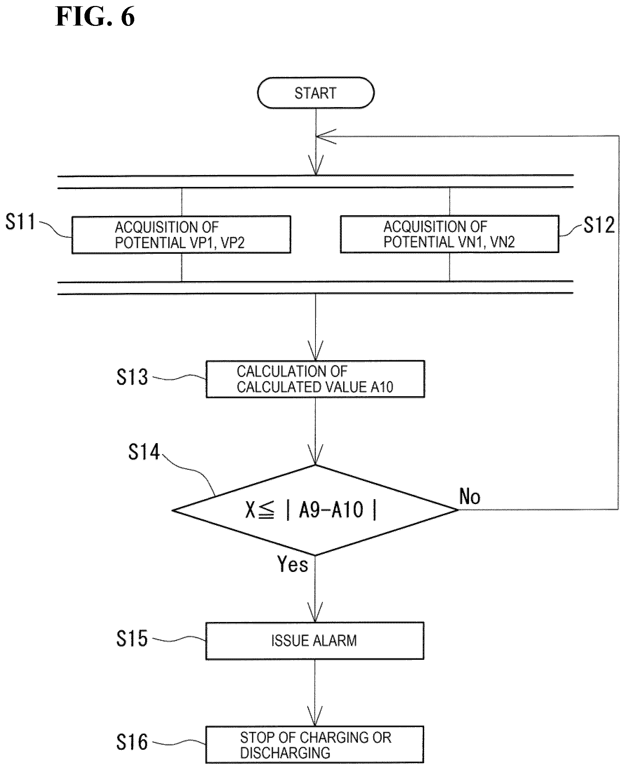

The control procedure by controller 3 during operation will be described. Controller 3 performs steps S11 to S15 shown in FIG. 6. Controller 3 may end the control after performing the step S15, or may further perform a step S16 without ending the control after performing the step S15.

In the step S11, potentials VP1 and VP2 of the positive electrolyte itself are obtained. The step S11 corresponds to the above-described process P7. In the step S12, potentials VN1 and VN2 of the negative electrolyte itself are obtained. The step S12 corresponds to the above-described process P8. The step S11 and the step S12 are processed in parallel. In the step S13, the calculated value A10 is calculated. The step S13 corresponds to the above-described process P9. In the step S14, it is determined whether or not the calculated value A10 is deviated from the set value A9 by a predetermined value X or more. In the step S15, when the condition in the step S14 is satisfied, an operation command is issued to alarm device 100. The step S14 and the step S15 correspond to the above-described the process P10A. In the step S16, the charging or discharging is stopped. The step S16 corresponds to the above-described process P10B. When the condition of the step S14 is not satisfied, charging or discharging is maintained.

In the step S13, the calculated value A12 may be calculated instead of the calculated value A10. This step S13 corresponds to the process P9. In this case, in the step S14, it is determined whether or not the calculated value A12 is deviated from the set value A11 by the predetermined value X or more. This step S14 corresponds to the process P10A.

<<Fourth Embodiment>>

[Redox Flow Battery System]

The redox flow battery system of fourth embodiment can include reference positive electrolyte 8a and reference negative electrolyte 8b described in second embodiment with reference to FIG. 3 without including the reference positive electrode and the reference negative electrode in redox flow battery system 1 of third embodiment. Both reference positive electrolyte 8a and reference negative electrolyte 8b may be provided, or either one of reference positive electrolyte 8a and reference negative electrolyte 8b may be provided. For example, the redox flow battery system may not include positive monitor cell 2P and reference positive electrolyte 8a, but may include bipolar monitor cell 2B, negative monitor cell 2N, and reference negative electrolyte 8b.

The present invention is not limited to these examples, but is defined by the scope of the claims, and is intended to include all modifications within the meaning and scope equivalent to the scope of the claims.

For example, in the second embodiment, the example in which the reference positive electrolyte and the reference negative electrolyte are circulated has been described, but the reference positive electrolyte and the reference negative electrolyte may be filled in the reference cell without being circulated. In this case, the first tank, the second tank, the seventh supply pipe, the seventh discharge pipe, the eighth supply pipe, the eighth discharge pipe, the third pump, and the fourth pump may not be used.

In the redox flow battery system, when the specific condition is satisfied, the controller may stop charging or discharging of the main cell without operating the alarm device. That is, in the redox flow battery system, the controller may stop charging or discharging of the main cell without the alarm device issuing an alarm.

REFERENCE SIGNS LIST

1 redox flow battery system, 10 main cell
2B bipolar monitor cell, 2P positive monitor cell, 2N negative monitor cell
3 controller, 31 calculation device, 32 storage device, 33 determination device
34 pump controller, 35 valve controller, 36 alarm controller
4P positive electrolyte circulation mechanism, 4N negative electrolyte circulation mechanism
41 positive electrolyte tank, 42 Negative electrolyte tank
5a first supply pipe, 5b first discharge pipe, 5c third supply pipe, 5d third discharge pipe
5e fifth supply pipe, 5f fifth discharge pipe, 5g first pump
6a second supply pipe, 6b second discharge pipe, 6c fourth supply pipe, 6d fourth discharge pipe
6e sixth supply pipe, 6f sixth discharge pipe, 6g second pump
7P reference positive electrode, 7N reference negative electrode
7a first potential measuring device, 7b second potential measuring device, 7c third potential measuring device
8a reference positive electrolyte, 8b reference negative electrolyte
8c first tank, 8d second tank, 8e seventh supply pipe, 8f seventh discharge pipe
8g eighth supply pipe, 8h eighth discharge pipe, 8i third pump, 8j fourth pump
9 mixture unit, 9a first pipe, 9b second pipe, 9c third pipe

9d first valve portion, 9e second valve portion, 9f third valve portion, 9g fourth valve portion, 9h fifth valve portion
100 alarm device
300 alternating current/direct current converter, 310 power generation unit, 320 transformer facility, 330 load

**Claims**

1. A redox flow battery system comprising:

   a main cell configured to be charged and discharged by supply of a positive electrolyte and a negative electrolyte;
   a plurality of monitor cells selected from the group consisting of a bipolar monitor cell, a positive monitor cell, and a negative monitor cell; and
   a controller configured to control charging and discharging of the main cell,

   wherein

   the bipolar monitor cell is supplied with the positive electrolyte and the negative electrolyte, the positive electrolyte and the negative electrolyte being common to the main cell,
   the positive monitor cell is supplied with the positive electrolyte common to the main cell without being supplied with the negative electrolyte common to the main cell,
   the negative monitor cell is supplied with the negative electrolyte common to the main cell without being supplied with the positive electrolyte common to the main cell,
   the controller is configured to issue an operation command to an alarm device when a calculated value of an amount of change in a charging molar concentration of an active material of the positive electrolyte deviates from a measured value of the amount of change in the charging molar concentration of the active material of the positive electrolyte by a predetermined value or more or when a calculated value of an amount of change in a charging molar concentration of an active material of the negative electrolyte deviates from a measured value of the amount of change in the charging molar concentration of the active material of the negative electrolyte by a predetermined value or more,
   the measured value of the amount of change in the charging molar concentration of the active material of the positive electrolyte is obtained by the positive monitor cell or by the bipolar monitor cell and the negative monitor cell,

   the calculated value of the amount of change in the charging molar concentration of the active material of the positive electrolyte is obtained by using the measured value of the amount of change in the charging molar concentration of the active material of the negative electrolyte and a set value of a liquid amount ratio of the positive electrolyte to the negative electrolyte,
   the measured value of the amount of change in the charging molar concentration of the active material of the negative electrolyte is obtained by the negative monitor cell or by the bipolar monitor cell and the positive monitor cell, and
   the calculated value of the amount of change in the charging molar concentration of the active material of the negative electrolyte is obtained by using the measured value of the amount of change in the charging molar concentration of the active material of the positive electrolyte and a set value of a liquid amount ratio of the negative electrolyte to the positive electrolyte.

2. A redox flow battery system comprising:

   a main cell configured to be charged and discharged by supply of a positive electrolyte and a negative electrolyte;
   a plurality of monitor cells selected from the group consisting of a bipolar monitor cell, a positive monitor cell, and a negative monitor cell; and
   a controller configured to control charging and discharging of the main cell,

   wherein

   the bipolar monitor cell is supplied with the positive electrolyte and the negative electrolyte, the positive electrolyte and the negative electrolyte being common to the main cell,
   the positive monitor cell is supplied with the positive electrolyte common to the main cell without being supplied with the negative electrolyte common to the main cell,
   the negative monitor cell is supplied with the negative electrolyte common to the main cell without being supplied with the positive electrolyte common to the main cell,
   the controller is configured to issue an operation command to an alarm device when a calculated value of a liquid amount ratio of the positive electrolyte to the negative electrolyte deviates from a set value of the liquid amount ratio of the positive electrolyte to the negative electrolyte by a predetermined value or more or when a calculated value of a liquid amount ratio of the negative electrolyte to the positive electrolyte deviates from a set value of the liquid amount ratio of the negative electrolyte to the positive electrolyte by a predetermined value or more, the calculated value of the liquid amount ratio of the positive electrolyte to the negative electrolyte and the calculated value of the liquid amount ratio of the negative electrolyte to the positive electrolyte are obtained by using a measured value of an amount of change in a charging molar concentration of an active material of the positive electrolyte and a measured value of an amount of change in a charging molar concentration of an active material of the negative electrolyte,

the measured value of the amount of change in the charging molar concentration of the active material of the positive electrolyte is obtained by the positive monitor cell or by the bipolar monitor cell and the negative monitor cell, and

the measured value of the amount of change in the charging molar concentration of the active material of the negative electrolyte is obtained by the negative monitor cell or by the bipolar monitor cell and the positive monitor cell.

3. A redox flow battery system comprising:

a main cell configured to be charged and discharged by supply of a positive electrolyte and a negative electrolyte;
a plurality of monitor cells selected from the group consisting of a bipolar monitor cell, a positive monitor cell, and a negative monitor cell; and
a controller configured to control charging and discharging of the main cell,

wherein

the bipolar monitor cell is supplied with the positive electrolyte and the negative electrolyte, the positive electrolyte and the negative electrolyte being common to the main cell,
the positive monitor cell is supplied with the positive electrolyte common to the main cell without being supplied with the negative electrolyte common to the main cell,
the negative monitor cell is supplied with the negative electrolyte common to the main cell without being supplied with the positive electrolyte common to the main cell,
the controller is configured to issue an operation command to an alarm device when a calculated value of an active material concentration ratio of the positive electrolyte to the negative electrolyte deviates from a set value of the active material concentration ratio of the positive electrolyte to the negative electrolyte by a predetermined value or more or when a calculated value of an active material concentration ratio of the negative electrolyte to the positive electrolyte deviates from a set value of the active material concentration ratio of the negative electrolyte to the positive electrolyte by a predetermined value or more,

the calculated value of the active material concentration ratio of the positive electrolyte to the negative electrolyte is obtained by using a potential of the positive electrolyte, a potential of the negative electrolyte, and a set value of a liquid amount ratio of the positive electrolyte to the negative electrolyte,

the calculated value of the active material concentration ratio of the negative electrolyte to the positive electrolyte is obtained by using the potential of the positive electrolyte, the potential of the negative electrolyte, and a set value of a liquid amount ratio of the negative electrolyte to the positive electrolyte,

the potential of the positive electrolyte is obtained by the positive monitor cell or by the bipolar monitor cell and the negative monitor cell, and

the potential of the negative electrolyte is obtained by the negative monitor cell or by the bipolar monitor cell and the positive monitor cell.

4. The redox flow battery system according to claim 1 or 2, wherein

the positive monitor cell obtains the measured value of the amount of change in the charging molar concentration of the active material of the positive electrolyte, based on an absolute potential of the positive electrolyte, and
the negative monitor cell obtains the measured value of the amount of change in the charging molar concentration of the active material of the negative electrolyte, based on an absolute potential of the negative electrolyte.

5. The redox flow battery system according to claim 3 or 4, wherein

the positive monitor cell measures a potential difference of the positive electrolyte with respect to a reference positive electrode having a known potential, and
the negative monitor cell measures a potential difference of the negative electrolyte with respect to a reference negative electrode having a known potential.

6. The redox flow battery system according to claim 3 or 4, wherein

the positive monitor cell measures a potential difference of the positive electrolyte with respect to a reference positive electrolyte having a known amount of change in a charging molar concentration of an active material, and the negative monitor cell measures a potential difference of the negative electrolyte with respect to a reference negative electrolyte having a known amount of change in a charging molar concentration of an active material.

7. The redox flow battery system according to any one of claims 1 to 6, wherein the controller is configured to stop charging or discharging of the main cell after the controller issues the operation command to the alarm device.

8. The redox flow battery system according to any one of claims 1 to 7, wherein

   the bipolar monitor cell is provided in a circulation path of the positive electrolyte and the negative electrolyte, the positive monitor cell is provided in a circulation path of the positive electrolyte, and the negative monitor cell is provided in a circulation path of the negative electrolyte.

9. A method of operating a redox flow battery system for supplying a positive electrolyte and a negative electrolyte to a main cell to charge and discharge the main cell, the method comprising:

   obtaining, by a positive monitor cell or by a bipolar monitor cell and a negative monitor cell, a measured value of an amount of change in a charging molar concentration of an active material of the positive electrolyte; obtaining, by the negative monitor cell or by the bipolar monitor cell and the positive monitor cell, a measured value of an amount of change in a charging molar concentration of an active material of the negative electrolyte; obtaining a calculated value of the amount of change in the charging molar concentration of the active material of the positive electrolyte from the measured value of the amount of change in the charging molar concentration of the active material of the negative electrolyte and a set value of a liquid amount ratio of the positive electrolyte to the negative electrolyte, or obtaining a calculated value of the amount of change in the charging molar concentration of the active material of the negative electrolyte from the measured value of the amount of change in the charging molar concentration of the active material of the positive electrolyte and a set value of a liquid amount ratio of the negative electrolyte to the positive electrolyte; and

issuing an operation command to an alarm device when the calculated value of the amount of change in the charging molar concentration of the active material of the positive electrolyte deviates from the measured value of the amount of change in the charging molar concentration of the active material of the positive electrolyte by a predetermined value or more or when the calculated value of the amount of change in the charging molar concentration of the active material of the negative electrolyte deviates from the measured value of the amount of change in the charging molar concentration of the active material of the negative electrolyte by a predetermined value or more, wherein

the bipolar monitor cell is supplied with the positive electrolyte and the negative electrolyte, the positive electrolyte and the negative electrolyte being common to the main cell, the positive monitor cell is supplied with the positive electrolyte common to the main cell without being supplied with the negative electrolyte common to the main cell, and the negative monitor cell is supplied with the negative electrolyte common to the main cell without being supplied with the positive electrolyte common to the main cell.

10. A method of operating a redox flow battery system for supplying a positive electrolyte and a negative electrolyte to a main cell to charge and discharge the main cell, the method comprising:

    obtaining, by a positive monitor cell or by a bipolar monitor cell and a negative monitor cell, a measured value of an amount of change in a charging molar concentration of an active material of the positive electrolyte; obtaining, by the negative monitor cell or by the bipolar monitor cell and the positive monitor cell, a measured value of an amount of change in a charging molar concentration of an active material of the negative electrolyte; obtaining a calculated value of a liquid amount ratio of the positive electrolyte to the negative electrolyte or a calculated value of a liquid amount ratio of the negative electrolyte to the positive electrolyte, by using the measured value of the amount of change in the charging molar concentration of the active material of the positive electrolyte and the measured value of the amount of change in the charging molar concentration of the active material of the negative electrolyte; and issuing an operation command to an alarm device when the calculated value of the liquid amount ratio of the positive electrolyte to the negative electrolyte deviates from a set value of the liquid amount ratio of the positive electrolyte to the negative electrolyte by a predetermined value or more or when the calculated value of the liquid amount ratio of the negative electrolyte to the positive electrolyte deviates from a set value of the liquid amount ratio of the negative electrolyte to the positive electrolyte by a predetermined value or more, wherein the bipolar monitor cell is supplied with the positive electrolyte and the negative electrolyte, the positive electrolyte and the negative electrolyte being common to the main cell, the positive monitor cell is supplied with the positive electrolyte common to the main cell without being supplied with the negative electrolyte common to the main cell, and the negative monitor cell is supplied with the negative electrolyte common to the main cell without being supplied with the positive electrolyte common to the main cell.

11. A method of operating a redox flow battery system for supplying a positive electrolyte and a negative electrolyte to a main cell to charge and discharge the main cell, the method comprising:

obtaining, by a positive monitor cell or by a bipolar monitor cell and a negative monitor cell, a potential of the positive electrolyte;
obtaining, by the negative monitor cell or by the bipolar monitor cell and the positive monitor cell, a potential of the negative electrolyte;
obtaining a calculated value of an active material concentration ratio of the positive electrolyte to the negative electrolyte by using the potential of the positive electrolyte, the potential of the negative electrolyte, and a set value of a liquid amount ratio of the positive electrolyte to the negative electrolyte, or obtaining a calculated value of an active material concentration ratio of the negative electrolyte to the positive electrolyte by using the potential of the positive electrolyte, the potential of the negative electrolyte, and a set value of a liquid amount ratio of the negative electrolyte to the positive electrolyte; and
issuing an operation command to an alarm device when the calculated value of the active material concentration ratio of the positive electrolyte to the negative electrolyte deviates from a set value of the active material concentration ratio of the positive electrolyte to the negative electrolyte by a predetermined value or more or when the calculated value of the active material concentration ratio of the negative electrolyte to the positive electrolyte deviates from a set value of the active material concentration ratio of the negative electrolyte to the positive electrolyte by a predetermined value or more,

wherein

the bipolar monitor cell is supplied with the positive electrolyte and the negative electrolyte, the positive electrolyte and the negative electrolyte being common to the main cell, the positive monitor cell is supplied with the positive electrolyte common to the main cell without being supplied with the negative electrolyte common to the main cell, and the negative monitor cell is supplied with the negative electrolyte common to the main cell without being supplied with the positive electrolyte common to the main cell.

12. The method of operating a redox flow battery system according to any one of claims 9 to 11, further comprising, after the issuing of the operation command to the alarm device, stopping charging or discharging of the main cell.

# FIG. 1

# FIG. 2

```
                    ┌─────────────┐
                    │    START    │
                    └─────────────┘
                           │
                           ▼
    ════════════════════════════════════════════════════════

S1 ┌──────────────────────┐        ┌──────────────────────┐  S2
   │   CALCULATION OF      │        │   CALCULATION OF     │
   │  MEASURED VALUE A1    │        │  MEASURED VALUE A3   │
   └──────────────────────┘        └──────────────────────┘

    ════════════════════════════════════════════════════════
                           │
                           ▼
S3 ┌──────────────────────┐
   │   CALCULATION OF      │
   │  CALCULATED VALUE A2  │
   └──────────────────────┘
                           │
                           ▼
S4          ╱◇╲
        ╱         ╲            No
      X ≦ | A1−A2 |  ──────────────►
        ╲         ╱
            ╲◇╱
             │
            Yes
             │
             ▼
S5 ┌──────────────────────┐
   │     ISSUE ALARM       │
   └──────────────────────┘
             │
             ▼
S6 ┌──────────────────────┐
   │  STOP OF CHARGING OR  │
   │     DISCHARGING       │
   └──────────────────────┘
```

$$X \leqq |A1 - A2|$$

# FIG. 3

# FIG. 4

**FIG. 5**

# FIG. 6

START

S11 — ACQUISITION OF POTENTIAL VP1, VP2

S12 — ACQUISITION OF POTENTIAL VN1, VN2

S13 — CALCULATION OF CALCULATED VALUE A10

S14 — $X \leqq | A9 - A10 |$

No

Yes

S15 — ISSUE ALARM

S16 — STOP OF CHARGING OR DISCHARGING

## INTERNATIONAL SEARCH REPORT

| International application No. |
| --- |
| **PCT/JP2023/034911** |

**A. CLASSIFICATION OF SUBJECT MATTER**

*H01M 8/18*(2006.01)i; *H01M 8/0438*(2016.01)i; *H01M 8/0444*(2016.01)i; *H01M 8/04537*(2016.01)i; *H01M 8/04746*(2016.01)i; *H01M 8/04858*(2016.01)i; *H01M 8/04955*(2016.01)i
FI:   H01M8/18; H01M8/0438; H01M8/0444; H01M8/04537; H01M8/04746; H01M8/04858; H01M8/04955

According to International Patent Classification (IPC) or to both national classification and IPC

**B. FIELDS SEARCHED**

Minimum documentation searched (classification system followed by classification symbols)

H01M8/18; H01M8/0438; H01M8/0444; H01M8/04537; H01M8/04746; H01M8/04858; H01M8/04955

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2009-16217 A (SUMITOMO ELECTRIC IND LTD) 22 January 2009 (2009-01-22) claims, paragraphs [0010]-[0030] | 1-12 |
| A | JP 2014-137898 A (SUMITOMO ELECTRIC IND LTD) 28 July 2014 (2014-07-28) claims, paragraphs [0011]-[0013] | 1-12 |
| A | WO 2015/182339 A1 (SUMITOMO ELECTRIC IND LTD) 03 December 2015 (2015-12-03) claims | 1-12 |
| A | JP 2003-243017 A (KANSAI ELECTRIC POWER CO INC) 29 August 2003 (2003-08-29) paragraphs [0028]-[0061] | 1-12 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **16 January 2024** | **30 January 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (July 2022)

**INTERNATIONAL SEARCH REPORT**
Information on patent family members

International application No.

**PCT/JP2023/034911**

| Patent document cited in search report | | | Publication date (day/month/year) | Patent family member(s) | | | Publication date (day/month/year) |
|---|---|---|---|---|---|---|---|
| JP | 2009-16217 | A | 22 January 2009 | (Family: none) | | | |
| JP | 2014-137898 | A | 28 July 2014 | (Family: none) | | | |
| WO | 2015/182339 | A1 | 03 December 2015 | US | 2017/0098849 | A1 | |
| | | | | claims | | | |
| | | | | JP | 2015-225787 | A | |
| | | | | EP | 3151325 | A1 | |
| | | | | CN | 106463754 | A | |
| JP | 2003-243017 | A | 29 August 2003 | (Family: none) | | | |

Form PCT/ISA/210 (patent family annex) (July 2022)

**EP 4 618 205 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022178361 A
- JP 2009016217 A
- JP 2020187939 A